# EUROPEAN PATENT APPLICATION

(11) **EP 4 465 033 A1**
(43) Date of publication of application: **20.11.2024**
(21) Application number: 22920484.7
(22) Date of filing: 30.11.2022
(51) Int. Cl.: G01N 27/28, G01N 27/416

(54) **ELECTROCHEMICAL GAS SENSOR AND METHOD FOR MANUFACTURING ELECTROCHEMICAL GAS SENSOR**

(30) Priority: 14.01.2022 JP 2022004271
(71) Applicant: Panasonic Intellectual Property Management Co., Ltd., Osaka-shi, Osaka 540-6207 (JP)
(72) Inventor: TAMURA, Satoru, Kadoma-shi, Osaka 571-0057 (JP); OTA, Koshi, Kadoma-shi, Osaka 571-0057 (JP); HASHIMOTO, Yusuke, Kadoma-shi, Osaka 571-0057 (JP); SHIGENO, Hiroki, Kadoma-shi, Osaka 571-0057 (JP)
(74) Representative: Müller-Boré & Partner Patentanwälte PartG mbB
(86) International application number: PCT/JP2022/044089
(87) International publication number: WO 2023/135964

(57) **Abstract**

An electrochemical gas sensor (1) as an embodiment of the present invention comprises an insulating substrate (10), an electrolyte layer (11) formed on the insulating substrate (10), a first metal layer (12) formed on the insulating substrate (10), and a second metal layer (13) formed on the insulating substrate (10) so as not to contact the first metal layer (12). The electrochemical gas sensor (1) also comprises a working electrode (20) formed covering the electrolyte layer (11) and the first metal layer (12) on the insulating substrate (10) so as to extend over the electrolyte layer (11) and the first metal layer (12), and a counter electrode (21) formed covering the electrolyte layer (11) and the second metal layer (13) so as to extend over the electrolyte layer (11) and the second metal layer (13).

## Description

### TECHNICAL FIELD

The present invention relates to an electrochemical gas sensor and to a method of manufacturing the sensor.

### BACKGROUND ART

Conventionally, electrochemical gas sensors comprising a working electrode, a counter electrode, and an ion conductor are known. In an electrochemical gas sensor, for example, the working electrode and the counter electrode are connected via an external circuit, and when a gas to be detected such as carbon monoxide flows into the sensor, cations and electrons are generated at the working electrode. While the electrons flow toward the counter electrode through the external circuit, a concentration of the gas can be detected by measuring a short-circuit current at this point.

Electrochemical gas sensors are roughly divided into sensors that use a liquid electrolyte as the ion conductor and sensors that use a solid electrolyte as the ion conductor. For example, Patent Literature 1 discloses an electrochemical gas sensor comprising a solid polyelectrolyte membrane, a working electrode, a counter electrode, a gas diffusion layer, and a filter. In the sensor, a conductive and porous gas diffusion layer covers the working electrode and either the gas diffusion layer is hydrophilic or the filter is made of hydrophilic activated carbon. Note that Patent Literature 1 describes an effect whereby a decline in sensitivity in a dry atmosphere can be suppressed.

### CITATION LIST

### PATENT LITERATURE

PATENT LITERATURE 1: International Publication No. WO 2017/047316

### SUMMARY

In electrochemical gas sensors, cost reduction, downsizing, and achieving higher sensitivity are important issues. In order to achieve higher sensitivity of sensors, a baseline that is outputted when a gas to be detected is not present must be stabilized. Studies carried out by the present inventors revealed that when contact resistance of a laminated structure of a sensor is unstable, noise of the baseline increases and sensitivity of the sensor decreases. While mounting a fastening member to the sensor and forcibly pressing the laminated structure is conceivable as means for stabilizing the contact resistance of the laminated structure, in this case, problems such as making a structure of the sensor complicated and increasing a size of the sensor are expected to arise.

An object of the present invention is to provide an electrochemical gas sensor in which a baseline has excellent stability despite being structured so as not to require a special fastening jig or the like.

An electrochemical gas sensor which is an aspect of the present invention comprises: an insulating base material; an electrolyte layer formed on the insulating base material; a first metal layer formed on the insulating base material; a second metal layer formed on the insulating base material so as not to come into contact with the first metal layer; a working electrode either formed so as to cover surfaces of the electrolyte layer and the first metal layer which face an opposite side to the insulating base material, or interposed between the electrolyte layer and the insulating base material and between the first metal layer and the insulating base material and formed from the electrolyte layer to the first metal layer; and a counter electrode either formed so as to cover surfaces of the electrolyte layer and the second metal layer which face an opposite side to the insulating base material, or interposed between the electrolyte layer and the insulating base material and between the second metal layer and the insulating base material and formed from the electrolyte layer to the second metal layer.

A method of manufacturing an electrochemical gas sensor which is an aspect of the present invention comprises the steps of: forming a first metal layer and a second metal layer on an insulating base material so as not to come into contact with each other; forming an electrolyte layer on the insulating base material; and forming a working electrode and a counter electrode on the insulating base material so as not to come into contact with each other, wherein the working electrode is formed from the electrolyte layer to the first metal layer and the counter electrode is formed from the electrolyte layer to the second metal layer.

In the method of manufacturing an electrochemical gas sensor which is an aspect of the present invention, the working electrode and the counter electrode are formed by, for example, applying an electrode material on the insulating base material.

According to an aspect of the present invention, an electrochemical gas sensor in which a baseline has excellent stability, despite being structured so as not to require a special fastening jig or the like, can be provided. According to an aspect of the present invention, for example, cost reduction, downsizing, and higher sensitivity in an electrochemical gas sensor can be achieved.

### BRIEF DESCRIPTION OF DRAWINGS

FIG. 1 is an exploded perspective view of an electrochemical gas sensor which is an example of an embodiment.
FIG. 2 is a plan view of the electrochemical gas sensor which is an example of an embodiment.
FIG. 3 is a sectional view of an electrochemical sensor which is an example of an embodiment.
FIG. 4 is a sectional view showing a modification of the electrochemical gas sensor.
FIG. 5 is a sectional view showing a modification of the electrochemical gas sensor.
FIG. 6 is a sectional view showing a modification of the electrochemical gas sensor.
FIG. 7 is a sectional view showing a modification of the electrochemical gas sensor.
FIG. 8 is a sectional view showing a modification of the electrochemical gas sensor.
FIG. 9 is a sectional view showing a modification of the electrochemical gas sensor.
FIG. 10 is a sectional view showing a modification of the electrochemical gas sensor.
FIG. 11 is a view for describing a method of manufacturing an electrochemical gas sensor which is an example of an embodiment.
FIG. 12 is a view showing an example of an electrochemical sensor comprising an anti-drying filter.
FIG. 13 is a view showing an arrangement pattern of the anti-drying filter.
FIG. 14 is a view showing an example of the anti-drying filter.
FIG. 15 is a view showing another example of the anti-drying filter.
FIG. 16 is a view showing a base material surface of the anti-drying filter subjected to a silylation treatment.
FIG. 17 is a view showing a base material surface of the anti-drying filter on which a silane compound has been deposited by vapor deposition.
FIG. 18 is a sectional view showing the electrochemical sensor having been used in an example.
FIG. 19 is a view showing a change in sensitivity over time of the electrochemical sensor in a dry atmosphere.

### DESCRIPTION OF EMBODIMENT

Hereinafter, an example of an embodiment of an electrochemical gas sensor according to the present invention will be described in detail with reference to the drawings. Note that the present invention includes configurations created by selectively combining the plurality of embodiments and modifications described below.

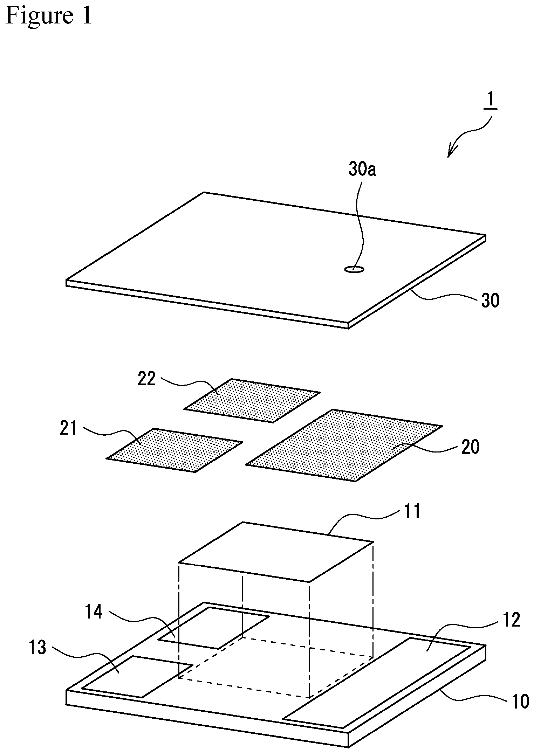

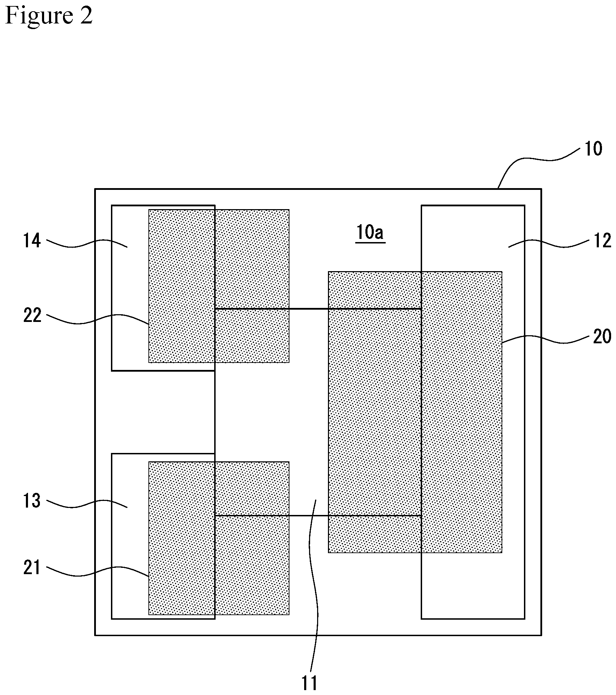

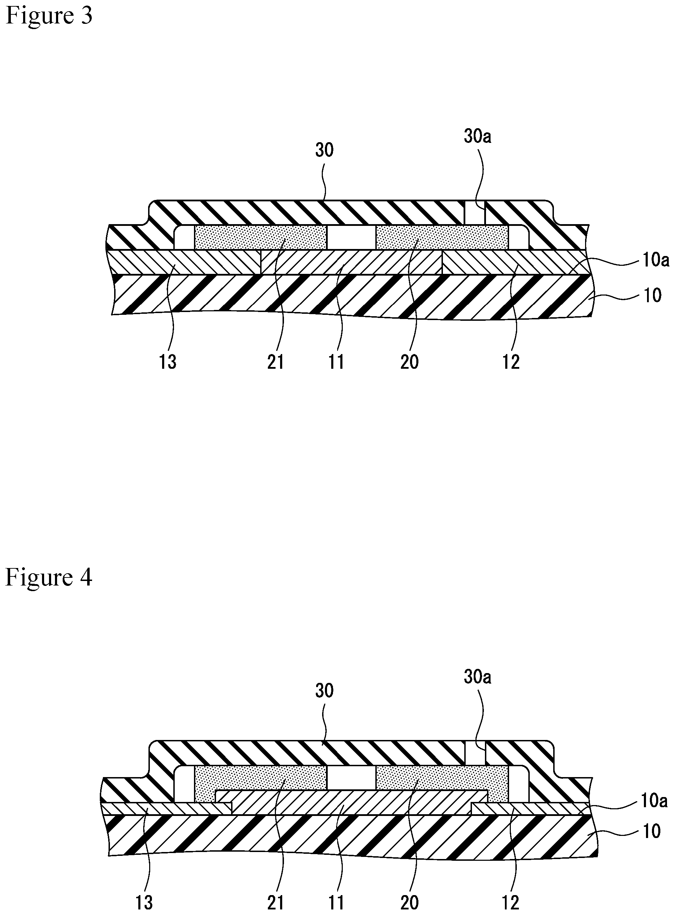

FIG. 1 is an exploded perspective view of an electrochemical gas sensor 1 which is an example of an embodiment. FIG. 2 is a plan view of the electrochemical gas sensor 1 in which illustration of a sealing layer 30 is omitted. FIG. 3 is a sectional view of the electrochemical gas sensor 1. Note that the drawings have been schematically described and dimensional ratios of respective constituent elements and the like are to be based on the following description.

As shown in FIGS. 1 to 3, the electrochemical gas sensor 1 comprises an insulating base material 10, an electrolyte layer 11 formed on the insulating base material 10, and metal layers formed on the insulating base material 10. In addition, the electrochemical gas sensor 1 comprises a working electrode 20 and a counter electrode 21 formed on the insulating base material 10. The metal layers include a first metal layer 12 and a second metal layer 13, and each metal layer functions as an extraction electrode which electrically connects each electrode and an external circuit (not illustrated) to each other. The second metal layer 13 is formed on the insulating base material 10 so as not to come into contact with the first metal layer 12.

The working electrode 20 and the counter electrode 21 are arranged so as to be capable of ionic conduction via the electrolyte layer 11. The working electrode 20 is an electrode into which gas to be detected flows, and is also called a detection electrode. The counter electrode 21 is formed on the insulating base material 10 so as not to come into contact with the working electrode 20. In the present embodiment, the working electrode 20 covers the electrolyte layer 11 and the first metal layer 12 on the insulating base material 10 and is formed from the electrolyte layer 11 to the first metal layer 12. The counter electrode 21 covers the electrolyte layer 11 and the second metal layer 13 on the insulating base material 10 and is formed from the electrolyte layer 11 to the second metal layer 13.

In other words, the working electrode 20 is formed on surfaces of the electrolyte layer 11 and the first metal layer 12 which face an opposite side to the insulating base material 10, and the counter electrode 21 is formed on surfaces of the electrolyte layer 11 and the second metal layer 13 which face an opposite side to the insulating base material 10. The working electrode 20 and the counter electrode 21 cover surfaces of the electrolyte layer 11 and each metal layer which faces an opposite side to the insulating base material 10, and are only formed on the surfaces.

Although details will be described later, the electrochemical gas sensor 1 has a laminated structure in which the electrolyte layer 11, the electrodes, and the metal layers (extraction electrodes), being main constituent elements of the sensor, are directly formed on one surface (first surface 10a) of the insulating base material 10 and are integrally joined. In other words, the electrolyte layer 11, the electrodes, and the metal layers are formed on the first surface 10a. Accordingly, favorable adhesion of the laminated structure is obtained, a resistance value of the sensor decreases and stabilizes, and stability of a baseline improves significantly without using a special fastening jig or the like. In addition, the sensor can be readily manufactured and cost reduction of the sensor can be realized.

The electrochemical gas sensor 1 causes gas to be detected to flow into the working electrode 20, oxidizes or reduces molecules of the gas on the working electrode 20, and detects a concentration of the gas by measuring a change in a current or a potential which accompanies the redox reaction. While the electrochemical gas sensor 1 may be a potential detection type sensor, a current detection type sensor will be exemplified in the present embodiment. When molecules of the gas are oxidized or reduced at the working electrode 20, electrons are generated or consumed and a current flows between the working electrode 20 and the counter electrode 21. Since a value of the current is in a proportional relationship with gas concentration, gas concentration can be detected by measuring the current value. While cations or anions are generated when the electrons are generated or consumed due to the redox reaction at the working electrode 20, the generated ions move to the counter electrode 21 via the electrolyte layer 11.

The electrochemical gas sensor 1 further comprises a third metal layer 14 and a reference electrode 22 formed from the electrolyte layer 11 to the third metal layer 14. The third metal layer 14 is formed on the insulating base material 10 so as not to come into electrical contact with the first metal layer 12 and the second metal layer 13. The reference electrode 22 is formed so as to come into contact with the electrolyte layer 11 but not to come into contact with the working electrode 20 and the counter electrode 21.

The reference electrode 22 is an electrode to act as a reference when controlling and measuring a potential of the working electrode 20 and is also referred to as a standard electrode. The working electrode 20 is connected to the reference electrode 22 via an external circuit and configured so as to maintain a constant potential with the reference electrode 22 using the external circuit. For example, the potential of the working electrode 20 is maintained at a potential at which the gas to be detected can be oxidized. In the present embodiment, the working electrode 20, the counter electrode 21, and the reference electrode 22 are all formed on the same surface of the electrolyte layer 11.

Hereinafter, carbon monoxide (CO) will be described as an example of the gas to be detected. However, a sensor to which the configuration of the electrochemical gas sensor according to the present invention can be applied is not limited to a carbon monoxide sensor. The configuration of the electrochemical gas sensor according to the present invention can be widely applied to electrochemical gas sensors using a solid electrolyte membrane and, for example, the configuration can also be applied to sensors which detect hydrogen sulfide (H₂S), nitric oxide (NO), nitrogen dioxide (NO₂), sulfur dioxide (SO₂), ozone (O₃), ammonia (NH₃), and the like as gases to be detected.

When the gas to be detected by the electrochemical gas sensor 1 is CO, an oxidation reaction of CO represented by Expression (1) occurs at the working electrode 20.

CO + H₂O → CO₂ + 2H⁺ + 2e⁻ ... (1)

CO having flowed into the working electrode 20 reacts with water molecules to generate CO₂ and protons (H⁺) and electrons are generated. The protons move to the counter electrode 21 via the electrolyte layer 11 and the electrons move to the counter electrode 21 via the external circuit. A reaction represented by Expression (2) occurs at the counter electrode 21.

1/2 O₂ + 2H⁺ + 2e⁻ → H₂O ... (2)

The protons and the electrons generated at the working electrode 20 react with oxygen in air at the counter electrode 21 and generate water. At this point, since a current that flows through the external circuit is in a proportional relationship with an amount of CO that flows into the working electrode 20, by measuring the current, a concentration of CO is detected.

The electrochemical gas sensor 1 further comprises the sealing layer 30 that covers the electrolyte layer 11, the working electrode 20, the counter electrode 21, and the reference electrode 22. The sealing layer 30 is arranged on the insulating base material 10 and bonded to the first surface 10a of the insulating base material 10 on which the electrolyte layer 11 and the respective electrodes are laminated.

The sealing layer 30 is preferably made of a material with low permeability of gas (CO) and may include a gas barrier layer that is a metal layer, an inorganic compound layer, or the like. The sealing layer 30 has a gas introduction hole 30a that is a through-hole for introducing CO to the working electrode 20. The sealing layer 30 entirely covers the electrolyte layer 11 and the respective electrodes so that CO only flows in from the gas introduction hole 30a and a peripheral edge of the sealing layer 30 is bonded to the first surface 10a. In addition, the electrolyte layer 11 and the respective electrodes are arranged in a space enclosed by the insulating base material 10 and the sealing layer 30. Note that a location where the gas introduction hole (through-hole) is formed is not limited to the sealing layer. For example, the through-hole may be formed in the insulating base material.

The sealing layer 30 is constituted of a resin with low gas permeability. Examples of the resin that constitutes the sealing layer 30 include olefin-based resins such as polyethylene, polypropylene, and polyvinyl chloride, polyesters such as polyethylene terephthalate, acrylic resins, polycarbonates, polyimides, and polyphenylene sulfide. The sealing layer 30 may be a layer with a single-layer structure that is constituted of such resins as a principal component.

The sealing layer 30 may be made of a sheet including a base material layer and an adhesive layer. A resin film containing the resins described above as a principal component, a metal sheet, or the like may be used as the base material layer. A metal layer of aluminum or the like or an inorganic compound layer of silica, silicon nitride, alumina, or the like may be formed as a gas barrier layer on a surface of the resin film. For example, an epoxy-based adhesive, an acrylic adhesive, a urethane-based adhesive, or a silicone-based adhesive is used in the adhesive layer. The adhesive may have adherence at room temperature or the adhesive may be a hot-melt adhesive that develops adherence when heated or a curable adhesive.

Hereinafter, a configuration of each of the insulating base material 10, the electrolyte layer 11, the metal layers, and the electrodes will be described in greater detail.

As shown in FIGS. 2 and 3, the electrolyte layer 11, the first metal layer 12, the second metal layer 13, and the third metal layer 14 are directly formed on the first surface 10a of the insulating base material 10. The three metal layers are formed in regions that do not come into contact with each other on the first surface 10a. In the example shown in FIG. 2, the first surface 10a has a square shape in a plan view, the electrolyte layer 11 is formed in a central part of the first surface 10a, and the three metal layers are respectively formed at ends of the first surface 10a so as to sandwich the electrolyte layer 11. In addition, an edge of the electrolyte layer 11 and edges of the respective metal layers are in contact with each other and gaps are not present between the electrolyte layer 11 and the metal layers.

The working electrode 20, the counter electrode 21, and the reference electrode 22 are formed on the first surface 10a of the insulating base material 10 so as to cover the electrolyte layer 11 and the metal layers. In other words, the three electrodes are each formed on a surface on an opposite side to a surface facing a side of the insulating base material 10, among surfaces of the electrolyte layer 11. A laminated structure, of which a lower layer is made up of the electrolyte layer 11 and the metal layers, and an upper layer is made up of the three electrodes, is formed on the first surface 10a of the insulating base material 10 and the upper layer (electrode layer) is joined to the first surface 10a via the lower layer. The electrode layer covers a part of the electrolyte layer 11 and the metal layers.

The working electrode 20, the counter electrode 21, and the reference electrode 22 are separately formed on the electrolyte layer 11 and the metal layers so as not to come into contact with each other. As described above, the working electrode 20 is formed from the electrolyte layer 11 to the first metal layer 12, the counter electrode 21 is formed from the electrolyte layer 11 to the second metal layer 13, and the reference electrode 22 is formed from the electrolyte layer 11 to the third metal layer 14. Note that a part of the electrodes may be directly formed on the first surface 10a of the insulating base material 10.

Although details will be described later, the working electrode 20, the counter electrode 21, and the reference electrode 22 are preferably formed by applying an electrode material on the first surface 10a of the insulating base material 10 on which the electrolyte layer 11 and the metal layers are formed. In this case, the electrodes can be readily formed, favorable adhesion of the electrodes with respect to the electrolyte layer 11 and the metal layers can be obtained without using a special fastening jig or the like, and an effect of improving stability of a baseline becomes more prominent.

### [Insulating Base Material]

The insulating base material 10 is a base material having insulation properties that are secured in at least a portion where the electrochemical gas sensor 1 is to be constructed. The insulating base material 10 functions as a support member of the electrolyte layer 11, the metal layers, and the electrodes, and also functions as a sealing member which seals the electrolyte layer 11 and the electrodes together with the sealing layer 30. In the example shown in FIGS. 2 and 3, the insulating base material 10 has a square shape in a plan view and the first surface 10a is a flat substrate. Note that a shape, dimensions, and the like of the insulating base material 10 are not particularly limited and any base material can be applied as the insulating base material 10.

The insulating base material 10 may be a dedicated base material for the electrochemical gas sensor 1 or a circuit board (generally, also referred to as a "printed wiring board") on which other electronic components are mounted. For example, the insulating base material 10 is a substrate which has wiring formed on/in at least one of a surface and an interior, and which is mounted with a plurality of electronic components. The electrochemical gas sensor 1 may be connected to other electronic components mounted to a same circuit board and a treatment based on information detected by the sensor may be executed in the circuit board. In other words, the electrochemical gas sensor 1 can be constructed on a circuit board on which other electronic components are mounted.

### [Electrolyte Layer]

The electrolyte layer 11 is a layer made of an ion conductor membrane which transmits ions generated at the working electrode 20 to the counter electrode 21, and which is an insulating membrane without electron conductivity. For example, while the electrolyte layer 11 may be constituted by having a holding member such as a porous sheet absorb a liquid electrolyte, preferably, the electrolyte layer 11 is constituted of a solid electrolyte made of a polymeric material. In the present embodiment, a solid electrolyte with proton conductivity is used. Examples of a solid electrolyte with proton conductivity include a hydrocarbon-based polymer or a fluorine-based polymer containing a proton-conducting group such as a sulfonic acid group. A commercially-available product such as Nafion (registered trademark: manufactured by DuPont de Nemours, Inc.) may be used in the electrolyte layer 11.

While a thickness of the electrolyte layer 11 is not particularly limited, for example, the thickness ranges from 1 µm to 400 m. While FIG. 2 illustrates the electrolyte layer 11 with a square shape in a plan view, the shape of the electrolyte layer 11 is not particularly limited and can be appropriately modified according to a shape of the insulating base material 10 or the like. While the electrolyte layer 11 may be formed on the first surface 10a of the insulating base material 10 by pasting a solid electrolyte membrane, the electrolyte layer 11 is preferably formed by applying a constituent material of a solid electrolyte.

### [Metal Layers]

As described above, the metal layers include the first metal layer 12 to which the working electrode 20 is connected, the second metal layer 13 to which the counter electrode 21 is connected, and the third metal layer 14 to which the reference electrode 22 is connected. Each metal layer functions as an extraction electrode which electrically connects each electrode and an external circuit (not illustrated) to each other, and a part of the metal layer is covered by the sealing layer 30 while a remaining part extends out from a region covered by the sealing layer 30. For example, wiring or the like connected to an external circuit is connected to the metal layer.

For example, each metal layer is formed by forming a metal thin film on the first surface 10a of the insulating base material 10 and subsequently subjecting the thin film to pattern etching in a shape of each metal layer. Each metal layer may be formed by further depositing a plated layer on the patterned metal thin film. An example of a metal layer is a layer obtained by plating a copper foil with nickel/gold. Thicknesses of the respective metal layers are substantially the same. An example of the thickness of each metal layer is 1 µm to 100 µm. A metal layer 52 may be formed by vapor deposition or the like.

From the perspective of downsizing the electrochemical gas sensor 1, each metal layer is preferably formed in a periphery of the electrolyte layer 11. In the example shown in FIG. 2, the first metal layer 12, and the second metal layer 13 and the third metal layer 14, are formed divided into both sides in a first direction of the insulating base material 10 so as to sandwich the electrolyte layer 11. The second metal layer 13 and the third metal layer 14 are formed side by side in a second direction (a direction orthogonal to the first direction) of the insulating base material 10 so that a gap is created between the second metal layer 13 and the third metal layer 14. In addition, the first metal layer 12 may be formed so as to have a larger area than the second metal layer 13 and the third metal layer 14.

### [Electrodes (Working Electrode, Counter Electrode, and Reference Electrode)]

The working electrode 20 is formed on the electrolyte layer 11 and the first metal layer 12 formed on the first surface 10a of the insulating base material 10 and is in close contact with the electrolyte layer 11 and the first metal layer 12. In addition, a part of the working electrode 20 is directly formed on the first surface 10a. The working electrode 20 is in close contact with the first surface 10a together with the electrolyte layer 11 and the first metal layer 12, and is integrated with the insulating base material 10. Therefore, even when a force by which the working electrode 20 is pressed against the electrolyte layer 11 and the first metal layer 12 is small, a favorable contact state is obtained. As a result, conceivably, contact resistance decreases and stabilizes, and base current noise is suppressed.

As described above, the working electrode 20 is formed from the electrolyte layer 11 to the first metal layer 12. In other words, the working electrode 20 is formed continuously from on top of the electrolyte layer 11 to on top of the first metal layer 12 so as to straddle the electrolyte layer 11 and the first metal layer 12, and connect the two layers. In the example shown in FIG. 2, the working electrode 20 is formed in a square shape in a plan view and widely covers the first metal layer 12. In addition, the working electrode 20 widely covers the electrolyte layer 11 and is formed in a larger area than the counter electrode 21 and the reference electrode 22. A thickness of the working electrode 20 is, for example, larger than the thickness of the first metal layer 12 and less than or equal to the thickness of the electrolyte layer 11. An example of the thickness of the working electrode 20 is 1 µm to 300 µm or 10 µm to 100 µm.

The counter electrode 21 is formed on the electrolyte layer 11 and the second metal layer 13 formed on the first surface 10a of the insulating base material 10, and is in close contact with the electrolyte layer 11 and the second metal layer 13. In a similar manner, the reference electrode 22 is formed on the electrolyte layer 11 and the third metal layer 14 and is in close contact with the electrolyte layer 11 and the third metal layer 14. Therefore, a favorable contact state is obtained between each electrode and the electrolyte layer 11 and each metal layer, contact resistance decreases, and base current noise is suppressed. For example, the counter electrode 21 and the reference electrode 22 are formed in a square shape in a plan view in substantially the same area, and parts are directly formed on the first surface 10a.

The counter electrode 21 is formed from the electrolyte layer 11 to the second metal layer 13 and the reference electrode 22 is formed from the electrolyte layer 11 to the third metal layer 14. In other words, the counter electrode 21 is formed continuously from on top of the electrolyte layer 11 to on top of the second metal layer 13 so as to straddle the electrolyte layer 11 and the second metal layer 13, and connect the two layers. In addition, the reference electrode 22 is formed continuously from on top of the electrolyte layer 11 to on top of the third metal layer 14 so as to straddle the electrolyte layer 11 and the third metal layer 14, and connect the two layers. In a similar manner to the working electrode 20, the counter electrode 21 and the reference electrode 22 are in close contact with the first surface 10a together with the electrolyte layer 11, the second metal layer 13, and the third metal layer 14, and are integrated with the insulating base material 10. For example, thicknesses of the counter electrode 21 and the reference electrode 22 are substantially the same as the thickness of the working electrode 20.

For example, the working electrode 20 and the counter electrode 21 include a catalyst, a conductive carrier, and an ionomer. In the present embodiment, the reference electrode 22 is also made of a similar material to the working electrode 20 and the counter electrode 21 and, for example, each electrode is made of the same material. The catalyst speeds up the oxidation reaction of CO and the reaction of Expression (1) above occurs on the catalyst of the working electrode 20. Examples of the catalyst include platinum (Pt), palladium (Pd), gold (Au), silver (Ag), ruthenium (Ru), rhodium (Rh), iridium (Ir), cobalt (Co), iron (Fe), and nickel (Ni). Among these catalysts, a precious metal catalyst such as Pt or a PtRu alloy is preferably used.

The conductive carrier is a conductive material which holds the catalyst. Examples of suitable conductive carriers include carbon materials such as carbon black, acetylene black, Ketjen black, graphite carbon, and carbon nanotubes. The catalyst is fixed to, for example, a particle surface of the carbon material. The ionomer is an ion-conductive material and enables protons created by a reaction to move. An example of a suitable ion-conductive material is Nafion (registered trademark: manufactured by DuPont de Nemours, Inc.) and Nafion with a similar composition to that of the electrolyte layer 11 is used.

As shown in FIG. 3, the electrochemical gas sensor 1 includes a lower layer made up of the electrolyte layer 11 and the metal layers, and an electrode layer formed on the lower layer. The lower layer and the electrode layer are bonded to the first surface 10a of the insulating base material 10 and integrated with the insulating base material 10. In other words, the electrolyte layer 11, the metal layers, and the electrode layer are formed on the first surface 10a of the insulating base material 10.

In the present embodiment, the electrolyte layer 11 and the metal layers are formed on the same plane so as not to overlap with each other. For example, when the electrolyte layer 11 and the metal layers overlap with each other, a large step is formed in an overlapping portion, but forming the electrolyte layer 11 and the metal layers so as not to overlap with each other makes the step smaller and reduces an effect on a shape of the electrode layer. While the electrolyte layer 11, the first metal layer 12, and the second metal layer 13 are illustrated with the same thickness in FIG. 3, generally, the thickness of the electrolyte layer 11 is larger than the thickness of the metal layers.

As shown in FIG. 4, the electrolyte layer 11 may be arranged on the insulating base material 10 so as to overlap with the first metal layer 12 and the second metal layer 13. The electrolyte layer 11 may further overlap with the third metal layer 14. When the electrolyte layer 11 and the metal layers overlap with each other, the electrolyte layer 11 is preferably arranged on top of the metal layers. In this case, a contact area between the electrolyte layer 11 and the electrodes can be readily increased compared to the mode illustrated in FIG. 3, which is advantageous for realizing higher sensitivity, downsizing, and the like of the sensor. The thickness of the electrolyte layer 11 in a region where the electrolyte layer 11 overlaps with the metal layers may be thinner than the thickness of the electrolyte layer 11 in other regions (regions where the electrolyte layer 11 does not overlap with the metal layers).

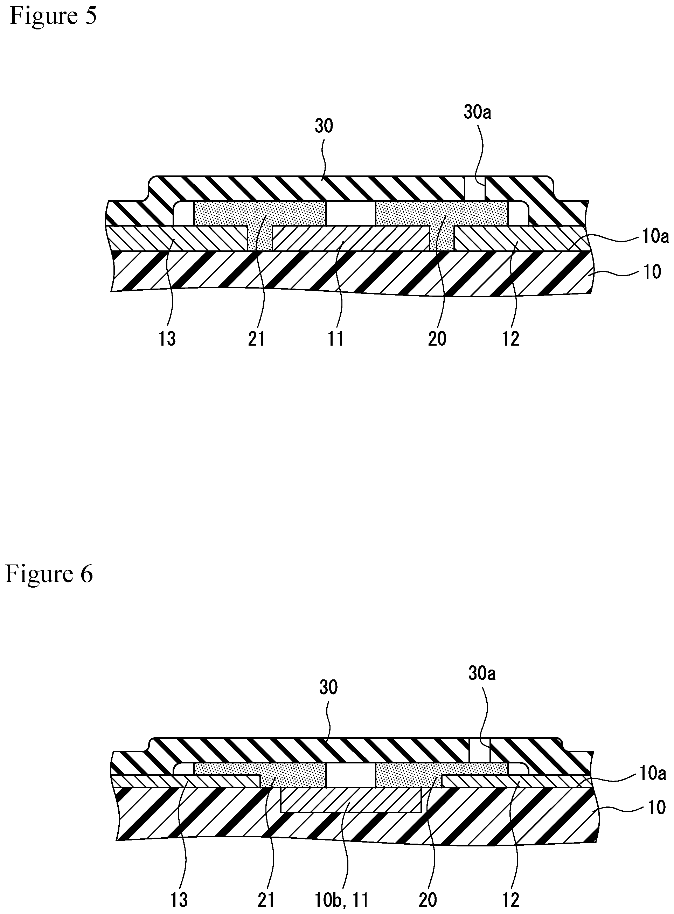

As shown in FIG. 5, the electrolyte layer 11 may be formed so as not to overlap with and not to come into contact with the metal layers. In the example shown in FIG. 5, the electrolyte layer 11 and the first metal layer 12 are formed with a predetermined interval therebetween, and the working electrode 20 is in close contact with the first surface 10a of the insulating base material 10 between the electrolyte layer 11 and the first metal layer 12. In this case, a positional relationship among the respective layers and the like need not be controlled and the respective layers can be readily manufactured compared to a mode (the mode shown in FIG. 3) in which the electrolyte layer 11 and the metal layers come into contact with each other.

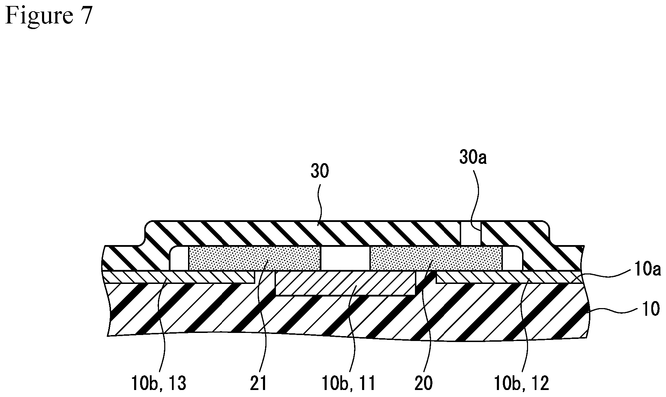

As shown in FIGS. 6 and 7, the first surface 10a of the insulating base material 10 on which the laminated structure of the electrochemical gas sensor 1 is formed is not limited to being flat and may have irregularities. In the examples shown in FIGS. 6 and 7, at least one recess 10b is formed on the first surface 10a of the insulating base material 10. The recess 10b is a depression formed in a part of the first surface 10a. At least any of the electrolyte layer 11, the first metal layer 12, the second metal layer 13, and the third metal layer 14 may be formed in the recess 10b.

In the example shown in FIG. 6, on the first surface 10a of the insulating base material 10, the electrolyte layer 11 is formed in the recess 10b and the first metal layer 12 and the second metal layer 13 are formed in a region where the recess 10b is not present (hereinafter, sometimes referred to as a "front surface" of the first surface 10a). Forming the electrolyte layer 11 in the recess 10b enables a step formed in the electrode layer to be reduced. The electrolyte layer 11 may be formed flush with the front surface of the first surface 10a.

In the example shown in FIG. 7, both the electrolyte layer 11 and the metal layers are formed in the recesses 10b on the first surface 10a of the insulating base material 10. The recess 10b in which the electrolyte layer 11 is formed may be formed so as to be deeper than the recess 10b in which the metal layers are formed. In addition, the electrolyte layer 11 and the metal layers may be formed flush with the front surface of the first surface 10a. In this case, the step formed in the electrode layer can be more effectively reduced.

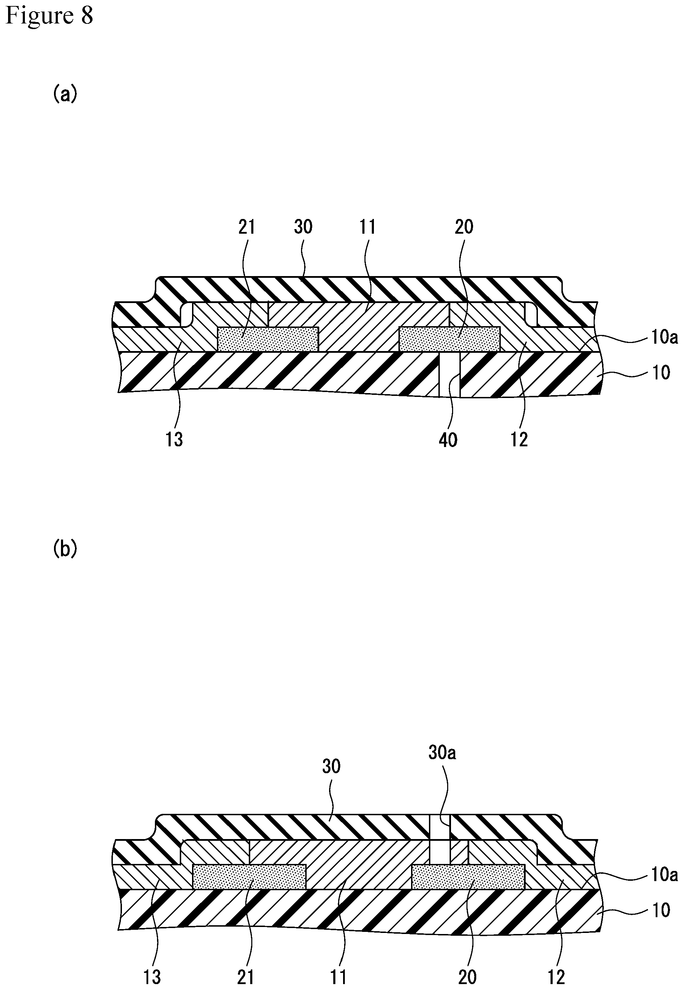

As shown in FIG. 8, the electrolyte layer 11 and the metal layers may be formed so as to cover the electrode layer formed on the insulating base material 10. In other words, in the example shown in FIG. 8, the working electrode 20 formed from the electrolyte layer 11 to the first metal layer 12 is interposed between the electrolyte layer 11 and the insulating base material 10 and between the first metal layer 12 and the insulating base material 10. In addition, the counter electrode 21 formed from the electrolyte layer 11 to the second metal layer 13 is interposed between the electrolyte layer 11 and the insulating base material 10 and between the second metal layer 13 and the insulating base material 10. Even in this case, the electrode layer, the electrolyte layer 11, and the metal layers are formed on one surface of the insulating base material and are integrated.

In the example shown in FIG. 8(a), a gas introduction hole 40 for introducing CO to the working electrode 20 is formed in the insulating base material 10. Only one gas introduction hole 40 is formed at a position that overlaps with the working electrode 20 so as to penetrate the insulating base material 10. In the example shown in FIG. 8(b), the gas introduction hole 30a is formed at a position opposing the working electrode 20 in the sealing layer 30. In the mode exemplified in FIG. 8(b), the gas introduction hole 30a is formed so as to penetrate the electrolyte layer 11 so that CO is introduced to the working electrode 20 arranged under the electrolyte layer 11.

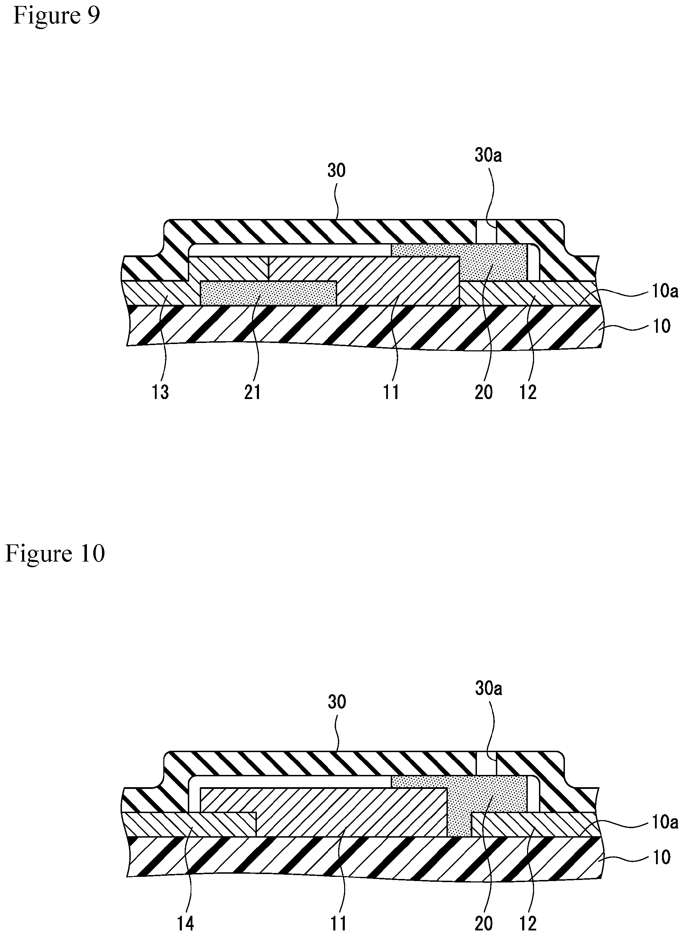

As shown in FIG. 9, the working electrode 20 and the counter electrode 21 can also be arranged so as to sandwich the electrolyte layer 11 and the metal layers. In the example shown in FIG. 9, the working electrode 20 is formed so as to cover surfaces of the electrolyte layer 11 and the first metal layer 12 which face an opposite side to the insulating base material 10, and the counter electrode 21 is interposed between the electrolyte layer 11 and the insulating base material 10 and between the first metal layer 12 and the insulating base material 10. In this case, a portion where the counter electrode 21, the electrolyte layer 11, and the working electrode 20 are laminated may be present. Note that the reference electrode 22 may be arranged above or below the electrolyte layer 11. In addition, the arrangements of the working electrode 20 and the counter electrode 21 may be reversed.

In the example shown in FIG. 10, the first metal layer 12 and the second metal layer 13 (not illustrated) are formed so as to be separated from the electrolyte layer 11, and the third metal layer 14 is formed so as to overlap with the electrolyte layer 11. A part of the third metal layer 14 extends under the electrolyte layer 11 and is interposed between the insulating base material 10 and the electrolyte layer 11. The third metal layer 14 is formed on the insulating base material 10 so as not to come into electrical contact with the first metal layer 12 and the second metal layer 13 in a similar manner to the other modes described above. The metal layers may also be used as a reference electrode and, in the example shown in FIG. 10, the third metal layer 14 comes into contact with the electrolyte layer 11 and functions as a reference electrode.

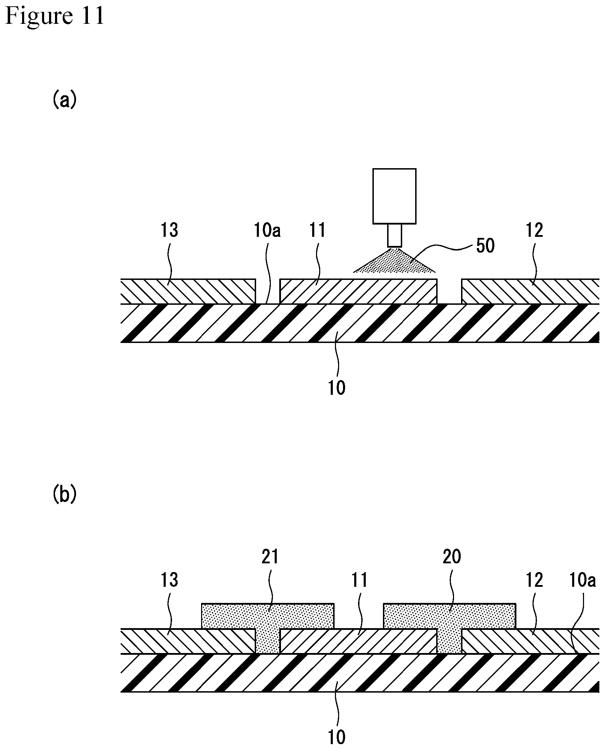

Hereinafter, an example of a method of manufacturing the electrochemical gas sensor 1 configured as described above will be described with reference to FIG. 11. FIG. 8 is a view for describing a manufacturing step of the electrochemical gas sensor 1 and shows a situation where an electrode layer including the working electrode 20 is being formed by spray-coating an electrode material 50.

For example, the electrochemical gas sensor 1 is manufactured through the following steps.
(1) A step of forming the first metal layer 12 and the second metal layer 13 so as not to come into contact with each other on the insulating base material 10.
(2) A step of forming the electrolyte layer 11 on the insulating base material 10.
(3) A step of forming the working electrode 20 and the counter electrode 21 so as not to come into contact with each other on the insulating base material 10.
(4) When the electrochemical gas sensor 1 has the sealing layer 30, a further step of forming the sealing layer 30 that covers the electrolyte layer 11, the working electrode 20, and the counter electrode 21 is included.

In the manufacturing steps of the electrochemical gas sensor 1, the working electrode 20 is formed from the electrolyte layer 11 to the first metal layer 12 and the counter electrode 21 is formed from the electrolyte layer 11 to the second metal layer 13. While a sequence of the steps (1) and (2) can be reversed, step (2) is preferably performed after step (1) from the perspective of productivity and the like.

In the present embodiment, as shown in FIG. 8, the working electrode 20, the counter electrode 21, and the reference electrode 22 are formed on the insulating base material 10 on which the electrolyte layer 11 and the metal layers have been formed. Each electrode is preferably formed by applying the electrode material 50 on the insulating base material 10. Since the electrolyte layer 11, each metal layer, and each electrode are formed on the first surface 10a of the insulating base material 10 and integrated with the insulating base material 10, a baseline is stabilized without using a special fastening jig. The electrolyte layer 11 and the sealing layer 30 can also be formed by applying constituent materials of the layers on the insulating base material 10.

In step (1) described above, the first metal layer 12, the second metal layer 13, and the third metal layer 14 are formed by, for example, forming a copper foil on the first surface 10a of the insulating base material 10, subjecting the copper foil to pattern etching in shapes of the respective metal layers, and plating portions where the copper foil remains. A plating layer with a two-layer structure of nickel and gold may be formed on the etched copper foil. When forming the metal layers in this manner, the electrolyte layer 11 is preferably formed after forming the metal layers.

In step (2) described above, the electrolyte layer 11 is formed by, for example, coating the first surface 10a of the insulating base material 10 with ink including a constituent material of a solid electrolyte, drying the coated film, and removing a dispersion medium by volatilization. In other words, the electrolyte layer 11 is formed by applying a material including an electrolyte. While the dispersion medium included in ink is not particularly limited, examples include a mixed solvent of water and a lower alcohol such as ethanol. Examples of ink coating methods include spray coating, screen printing, inkjet printing, electrolytic spray coating, and dispensing. Among these methods, spray coating and screen printing are preferable.

In step (3) described above, each electrode is formed by, for example, coating the first surface 10a of the insulating base material 10 on which the electrolyte layer 11 and the metal layers have been formed with ink including a catalyst, a conductive carrier, and the electrode material 50 such as an ionomer, drying the coated film, and removing a dispersion medium by volatilization. While the dispersion medium included in ink is not particularly limited, examples include a mixed solvent of water and a lower alcohol such as ethanol. A method similar to that of step (2) can be applied to coating of ink.

In step (4) described above, the sealing layer 30 is formed by, for example, coating the first surface 10a of the insulating base material 10 on which the metal layers, the electrolyte layer 11, and each electrode layer have been formed with ink including a resin with low gas permeability or the like, drying the coated film, and removing a dispersion medium by volatilization. In other words, the sealing layer 30 is formed by applying a sealing material. Forming the sealing layer 30 by applying a sealing material causes the ink (coating material) to penetrate into irregularities of the first surface 10a so that the sealing layer 30 is also formed in a portion where the step is present and, consequently, favorable adhesion of the sealing layer 30 to the first surface 10a is obtained. As the dispersion medium included in the ink, and a coating method, a dispersion medium and a coating method similar to those of the other steps described above can be used.

The sealing layer 30 can also be formed by applying a sheet (tape) including a base material layer and an adhesive layer to the first surface 10a of the insulating base material 10. Even in this case, the adhesive follows the irregularities of the first surface 10a and favorable adhesion of the sealing layer 30 with respect to the first surface 10a is obtained.

As described above, the electrochemical gas sensor 1 configured as described above has a laminated structure in which the electrolyte layer 11, the electrodes, and the metal layers are directly formed on the first surface 10a of the insulating base material 10 and are integrally joined. For this reason, favorable adhesion of the laminated structure is obtained and a contact resistance of the laminated structure decreases and stabilizes. Therefore, base current noise is suppressed and higher sensitivity of the sensor can be realized. According to the electrochemical gas sensor 1, since a favorable contact state of each constituent element can be secured even when a pressing force of the laminated structure is small, downsizing of the sensor and cost reduction can be achieved without the need for a special fastening member or the like.

The electrochemical gas sensor 1 can be manufactured by a simple method of forming the electrolyte layer 11, the metal layers, and the electrodes as films on the insulating base material 10. Therefore, a sensor structure can also be formed in a free space of a circuit board.

Note that a design of the embodiment described above can be appropriately modified without impairing the object of the present invention. For example, while the working electrode 20, the counter electrode 21, and the reference electrode 22 are formed using a same electrode material in the embodiment described above, each electrode may be made of a different material. In addition, the structure of the electrochemical gas sensor may be a bipolar structure which only comprises the working electrode and the counter electrode as electrodes. Alternatively, the counter electrode may double as a reference electrode and set a potential of the working electrode.

While a through-hole of the sealing layer for introducing gas is only formed at a position that overlaps with the working electrode in the embodiment described above, the through-hole may be additionally formed at a position that overlaps with the counter electrode. Since oxygen is required at the counter electrode, a drop in oxygen concentration around the counter electrode can be prevented by providing a through-hole at a position that overlaps with the counter electrode.

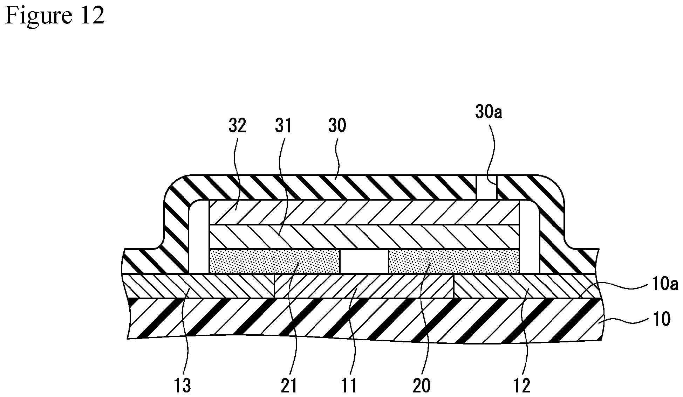

The electrochemical gas sensor 1 can also comprise a gas diffusion layer 31 and an anti-drying filter 32 to be used as anti-drying means. As shown in FIG. 12, the gas diffusion layer 31 and the anti-drying filter 32 are at least provided in a path by which a target gas reaches the working electrode 20 from the gas introduction hole 30a, and have a structure in which the gas diffusion layer 31, the anti-drying filter 32, and the sealing layer 30 are sequentially arranged on an electrode layer formed on a lower layer made up of the electrolyte layer 11 and the metal layers. In this case, the gas diffusion layer 31 and the anti-drying filter 32 may be joined to the insulating base material 10 via the electrode layer or the like or may be sandwiched between the insulating base material 10 and the sealing layer 30 in a non-joined state.

The gas diffusion layer 31 has a function of diffusing CO introduced from the gas introduction hole 30a over a wide range of the working electrode 20. For example, the gas diffusion layer 31 is made of a porous membrane with gas permeability. While a thickness of the gas diffusion layer 31 is not particularly limited, for example, the thickness ranges from 20 µm to 200 µm. While the gas diffusion layer 31 is arranged on the electrode layer so as to cover the entire electrode layer including the counter electrode 21 and the reference electrode 22 in the example shown in FIG. 12, the gas diffusion layer 31 may be arranged so as to only cover the working electrode 20. In the present embodiment, the gas diffusion layer 31 is preferably a non-conductive porous membrane. When the gas diffusion layer 31 is non-conductive, the gas diffusion layer 31 can be arranged so as to cover the entire electrode layer.

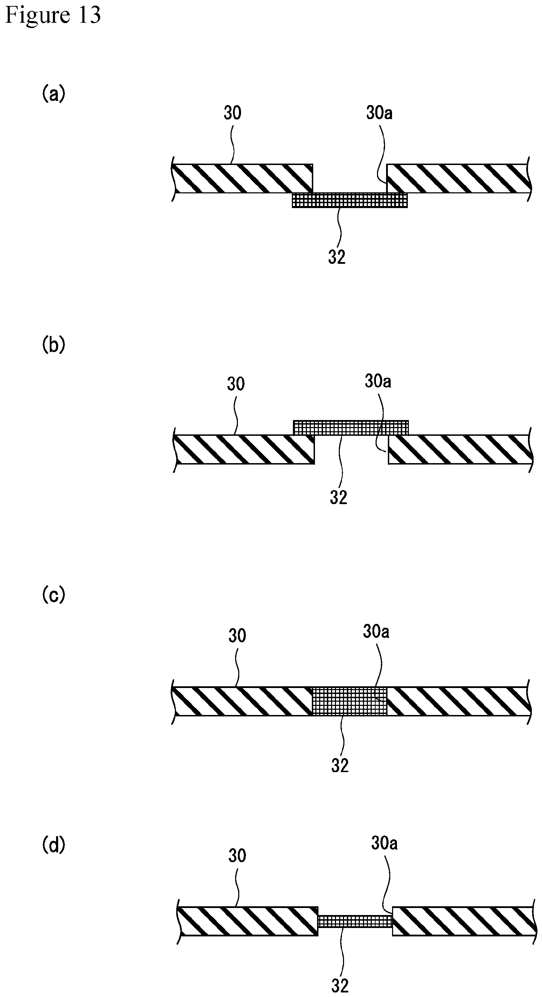

The anti-drying filter 32 has a function of preventing humidity inside the sensor from dropping excessively and is, preferably, a porous structure with a uniform pore architecture. While the anti-drying filter 32 is arranged on the electrode layer so as to cover the entire electrode layer including the counter electrode 21 and the reference electrode 22 in the example shown in FIG. 12, the anti-drying filter 32 may be arranged so as to only cover the working electrode 20. In addition, as shown in FIGS. 13(a) to 13(d), the anti-drying filter 32 may be arranged so as to cover the gas introduction hole 30a or may be arranged inside the gas introduction hole 30a. In this case, an effect of the anti-drying filter 32 can be obtained even if a size of the anti-drying filter 32 is minimal. Details of the anti-drying filter 32 will be provided later.

While the anti-drying filter 32 is used as anti-drying means in the present embodiment, other methods can be adopted as long as the humidity inside the sensor can be prevented from dropping or changing excessively. For example, the electrodes including the working electrode 20, the counter electrode 21, and the reference electrode 22 and the electrolyte layer 11 which are sensor constituent materials may be provided with drying tolerance. In this case, since the working electrode 20, the counter electrode 21, the reference electrode 22, and the electrolyte layer 11 become anti-drying means, the anti-drying filter 32 need not be separately provided.

For example, when the sensor and the electrodes include a catalyst, a conductive carrier, and an ionomer, mixing a hydrophilic material thereinto enables drying tolerance to be improved while maintaining functions as electrodes. Examples of the hydrophilic material to be mixed include particles of a metallic oxide such as silica (SiO₂), titania (TiO₂), zirconia (ZrO₂), and alumina (Al₂O₃). Since hydroxyl groups present on a surface of particles of the metallic oxides effectively retain moisture, drying tolerance improves.

Drying tolerance can also be improved by selecting a material with high hydrophilicity as the material itself being used in the conductive carrier, the ionomer, and the like, or by optimizing a mixing ratio of the materials. For example, by subjecting a surface of a carbon-based material that is used as the conductive carrier to a hydrophilic treatment, drying tolerance can be improved. Examples of the hydrophilic treatment include a method of generating a functional group such as a hydroxyl group or a carboxyl group that is a hydrophilic functional group on a surface of a material by an oxidation treatment and a method of generating a functional group such as a hydroxyl group or a carboxyl group that is a hydrophilic functional group on a surface of a material by a plasma treatment.

For example, when the ionomer is a proton-conducting material including a sulfonic acid group, since capability of retaining moisture increases when the ionomer includes more sulfonic acid groups, drying tolerance can be improved by selecting an ionomer with more sulfonic acid groups. In addition, since the ionomer generally retains more moisture than the conductive carrier, drying tolerance can also be improved by increasing a mixing ratio of the ionomer to the extent that functions as an electrode are not lost.

Hereinafter, a configuration of the anti-drying filter 32 will be described in greater detail. The anti-drying filter 32 is a porous membrane with a hydrophobic surface and a pore size of less than 100 nm. Note that a hydrophobic surface preferably refers to a surface of which, when the surface is a smooth plane, a contact angle of water on the plane is greater than or equal to 80°. The contact angle of water can be checked by forming a smooth surface using the same material as the material that constitutes the surface of the anti-drying filter 32 and measuring the contact angle of water on the formed surface.

The pore size is measured by whichever is suitable between a mercury intrusion method and a nitrogen adsorption method in accordance with a size of the pore. For example, when a value of the pore size is greater than or equal to 3 nm, a volume-based average pore size measured by the mercury intrusion method is adopted, and when the value of the pore size is less than 3 nm, a volume-based average pore size measured by the nitrogen adsorption method is adopted.

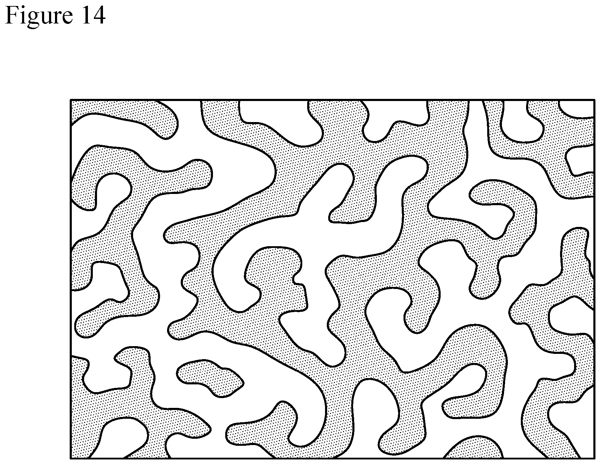

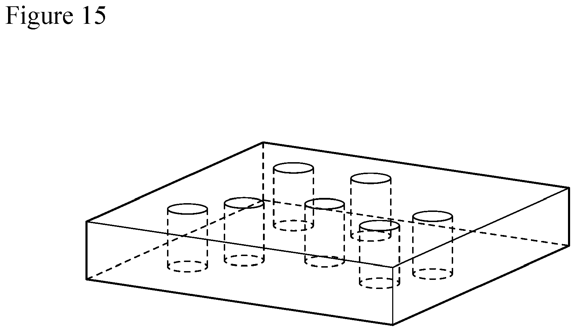

The pores in the anti-drying filter 32 may have a co-continuous structure such as that schematically shown in FIG. 14, or have a cylindrical shape that penetrates the anti-drying filter 32 in a thickness direction as schematically shown in FIG. 15. In addition, the anti-drying filter 32 may have pores formed by stretching the material of the anti-drying filter 32 and tearing the material into narrow strips. The structure of the pores of the anti-drying filter 32 is not limited to the structures described above and may have an appropriate structure.

In order to more effectively suppress passage of water vapor by the anti-drying filter 32, the pore size of the anti-drying filter 32 is preferably less than or equal to 80 nm and more preferably less than or equal to 60 nm. In addition, the pore size is preferably adjusted according to types of molecules to be passed through the anti-drying filter 32. For example, when causing carbon monoxide molecules to pass through the anti-drying filter 32, the pore size is preferably greater than or equal to 1 nm and more preferably greater than or equal to 10 nm. In this case, the anti-drying filter 32 can effectively suppress the passage of water vapor while selectively allowing carbon monoxide to pass through.

For example, the anti-drying filter 32 is formed of a hydrophobic material. In this case, the anti-drying filter 32 can have a hydrophobic surface.

The hydrophobic material preferably includes a resin containing fluorine. Examples of a resin containing fluorine contains at least one of the group consisting of polytetrafluoroethylene (PTFE), perfluoroalkoxy alkane (PFA), perfluoroethylene propene copolymer (FEP), ethylene-tetrafluoroethylene copolymer (ETFE), polyvinylidene fluoride (PVDF), polychlorotrifluoroethylene (PCTFE), ethylene-chlorotrifluoroethylene copolymer (ECTFE), and polyvinyl fluoride (PVF). When the hydrophobic material includes a resin containing fluorine, the anti-drying filter 32 is, for example, a porous sheet formed of the resin containing fluorine.

The surface of the anti-drying filter 32 may have hydrophobicity due to subjecting the surface of the anti-drying filter 32 to a hydrophobizing treatment. In this case, the anti-drying filter 32 is fabricated by, for example, subjecting a surface of a porous base material to a hydrophobizing treatment.

The porous base material may be fabricated from an appropriate material as long as a pore size thereof is within a desired range and hydrophobizing can be performed on a surface thereof. The pore size of the base material may be greater than or equal to 100 nm if the pore size of an anti-drying filter fabricated by subjecting the base material to a hydrophobizing treatment ends up being less than 100 nm.

For example, the base material is a sheet made of porous glass, a porous resin sheet, or the like. When fabricating porous glass, for example, after treating a raw material made of glass at a high temperature and inducing phase separation, by eluting and removing one phase from the raw material, porous glass made of a remaining phase can be obtained.

The hydrophobizing treatment is not particularly limited as long as the surface of the base material can be hydrophobized. For example, the hydrophobizing treatment includes a treatment including a silylation treatment, a treatment including a treatment of depositing a silane compound by vapor deposition, or a treatment of providing a water-repellent resin membrane.

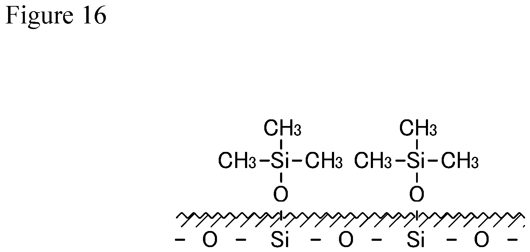

A silylation treatment refers to a treatment of introducing a silyl group to the surface of a base material with a silylation agent. FIG. 16 schematically shows a situation where the surface of a base material has been hydrophobized by a silylation agent. An example of the silyl group is, but not limited to, a trialkylsilyl group such as a trimethylsilyl group. In other words, while the silylation agent includes, for example, a trialkylsilyl group such as a trimethylsilyl group, the silyl group included in the silylation agent is not limited thereto. For example, the silylation agent contains at least one of the group consisting of hexamethyldisilazane (HMDS), trimethylchlorosilane (TMCS), N-methyl-N-trimethylsilylacetamide (MTMSA), N-trimethylsilyl diethylamine (TMSDEA), N-trimethylsilyl dimethylamine (TMSDMA), N-methyl-N-trimethylsilyl trifluoroacetamide (MSTFA), N,O-Bis(trimethylsilyl)acetamide (BSA), N,O-Bis(trimethylsilyl)trifluoroacetamide (BSTFA), N-trimethylsilylimidazole (TMSI), ethyldimethylchlorosilane, propyldimethylchlorosilane, dodecyldimethylchlorosilane, and phenyldimethylchlorosilane. For example, the silylation treatment is performed by immersing the base material in the silylation agent, cleaning the base material, and then drying the base material. Performing the silylation treatment enables the surface of the base material to be hydrophobized without significantly changing the pore size of the base material and, at the same time, a surface of an interior of the pores of the base material can be silylated.

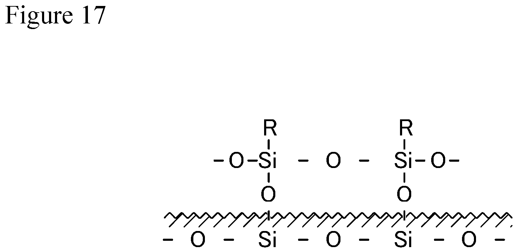

The treatment of depositing a silane compound by vapor deposition refers to a treatment of depositing the silane compound on the surface of the base material by vapor deposition to deposit the silane compound on the surface of the base material and, accordingly, introducing a hydrophobic group (R) derived from the silane compound to the surface of the base material. FIG. 17 schematically shows a situation where the surface of the base material has been hydrophobized by a treatment of depositing a silane compound by vapor deposition. The hydrophobic group (R) is, for example, an alkyl group or a fluorinated alkyl group. In other words, the silane compound preferably includes an alkyl group or a fluorinated alkyl group attached to a silicon atom. In addition, the silane compound preferably includes an alkoxy group. In this case, a reaction of the alkoxy group in the silane compound deposited on the base material with the surface of the base material enables the silane compound to become attached to the base material and, accordingly, enables hydrophobicity of the surface of the anti-drying filter 32 to be maintained over a long period of time. The silane compound preferably includes at least two alkoxy groups and more preferably includes three alkoxy groups. In this case, in addition to the alkoxy group in the silane compound reacting with the surface of the base material to cause the silane compound to attach to the base material, silane compounds can become attached to each other due to a reaction between alkoxy groups. Therefore, the hydrophobicity of the surface of the anti-drying filter 32 is maintained over a longer period of time or, in other words, durability of the anti-drying filter 32 is further increased. Examples of the silane compound contain at least one of the group consisting of methyltrimethoxysilane, methyltriethoxysilane, ethyltrimethoxysilane, ethyltriethoxysilane, propyltrimethoxysilane, propyltriethoxysilane, hexyltrimethoxysilane, octyltrimethoxysilane, decyltrimethoxysilane, dodecyltrimethoxysilane, hexadecyltrimethoxysilane, octadecyltrimethoxysilane, phenyltrimethoxysilane, (3,3,3-trifluoropropyl) trimethoxysilane, trimethoxy (1H,1H,2H,2H-nonafluorohexyl) silane, trimethoxy (1H,1H,2H,2H-tridecafluoro-n-octyl) silane, and trimethoxy (1H,1H,2H,2H-heptadecafluorodecyl) silane. The vapor deposition of the silane compound is performed in a state where the base material and the silane compound are placed in an airtight container by, for example, heating the interior of the airtight container.

When the hydrophobizing treatment includes a treatment of providing a water-repellent resin membrane, the resin membrane is fabricated from, for example, a fluorine-containing resin or a resin such as silicone. However, the resin contained in the resin membrane is not limited thereto. The water-repellent resin membrane develops water repellency by, for example, including a fluorine-containing group or a silicone-containing group on a surface thereof. Whether the resin membrane includes a fluorine-containing group or a silicone-containing group on a surface thereof can be checked by, for example, energy-dispersive X-ray spectroscopy (EDX). For example, the water-repellent resin membrane is fabricated by applying a coating liquid including a resin such as a fluorine-containing resin or a resin such as silicone to the base material by a known method such as dip coating, die coating, bar coating, spray coating, or spin coating. Dip coating is more preferable in order to ensure that the coating liquid penetrates into the pores of the base material. When providing a water-repellent resin membrane, the pore size in the anti-drying filter 32 can also be adjusted by adjusting an amount of the coating liquid to be applied to the base material.

A thickness of the anti-drying filter 32 is preferably greater than or equal to 0.1 mm. In this case, the anti-drying filter 32 can more effectively suppress the passage of water vapor. The thickness of the anti-drying filter 32 is more preferably greater than or equal to 0.2 mm and even more preferably greater than or equal to 0.5 mm. In addition, the thickness of the anti-drying filter 32 is preferably less than or equal to 2 mm. In this case, the anti-drying filter 32 can be further downsized and passage of molecules that the anti-drying filter 32 should pass is less likely to be inhibited. The thickness of the anti-drying filter 32 is more preferably less than or equal to 1.5 mm and even more preferably less than or equal to 1 mm.

### Examples of Anti-Drying Filter

Hereinafter, specific examples of the anti-drying filter will be described. Note that the present embodiment is not solely limited to the examples described below.

### 1. Fabrication of Anti-Drying Filter

### (1) Examples 1 to 3

Pieces of porous glass (dimensions in plan view: 20 mm × 20 mm, thickness: 1 mm) manufactured by Akagawa Glass Co., Ltd. were prepared. In Example 1, a piece of porous glass with a pore size of 50 nm was prepared, in Example 2, a piece of porous glass with a pore size of 70 nm was prepared, and in Example 3, a piece of porous glass with a pore size of 15 nm was prepared. After immersing the pieces of porous glass in trimethylchlorosilane overnight, the pieces of porous glass were subjected to a silylation treatment by cleaning the pieces of porous glass with hexane and then drying the pieces of porous glass. Accordingly, anti-drying filters were fabricated.

### (2) Example 4

A piece of porous glass (dimensions in plan view: 20 mm × 20 mm, thickness: 1 mm, pore size: 50 nm) manufactured by Akagawa Glass Co., Ltd. and trimethoxy (1H,1H,2H,2H-heptadecafluorodecyl) silane were placed in an airtight container and heated at 120°C for 20 minutes to deposit the silane compound on the piece of porous glass by vapor deposition. Accordingly, an anti-drying filter was fabricated.

### (3) Example 5

The piece of porous glass prepared in Example 1 was subjected to a silylation treatment using ethyldimethylchlorosilane instead of chlorotrimethylsilane. Accordingly, a gas filter was fabricated.

### (4) Example 6

The piece of porous glass prepared in Example 1 was immersed in a coating liquid and subsequently dried at 140°C for 1 hour to provide a resin membrane. As the coating liquid, a coating liquid created by adding butyl acetate as a solvent to a water-repellent coating MK-FSO-200 manufactured by Panasonic Environmental Systems & Engineering Co., Ltd. and adjusting a solid content to 10 mass% was used. Accordingly, a gas filter was fabricated.

### (5) Comparative Examples 1 to 3

The pieces of porous glass respectively prepared in Examples 1 to 3 were adopted as anti-drying filters as-is, without being subjected to a hydrophobizing treatment.

### 2. Fabrication of Electrochemical Gas Sensor

### (1) Example 7

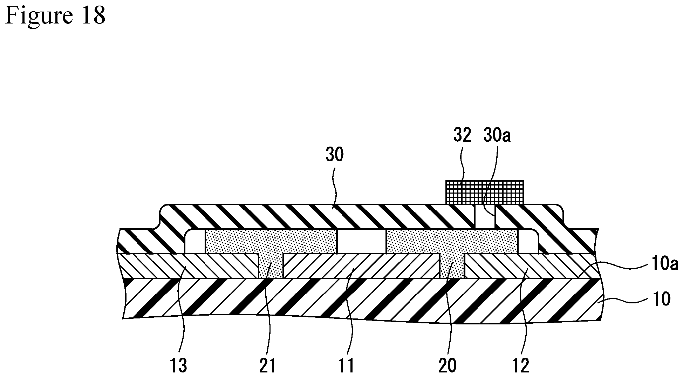

The electrochemical gas sensor 1 to be tested with the structure shown in FIG. 18 was fabricated as follows. An insulating substrate 10 was prepared and the metal layers and the electrolyte layer 11 were fabricated on the insulating substrate 10. Furthermore, the working electrode 20, the counter electrode 21, and the reference electrode (not illustrated) were fabricated so as to straddle the metal layers and the electrolyte layer 11 but so that the electrodes do not come into contact with each other. Each of the working electrode 20, the counter electrode 21, and the reference electrode (not illustrated) were fabricated by applying and forming a composition prepared by mixing a catalyst TEC10E50E manufactured by TANAKA Kikinzoku Kogyo K.K., a solid electrolyte dispersed solution DE2020 CS manufactured by FUJIFILM Wako Chemical Corporation, and water and ethanol as solvents, and drying the composition. Furthermore, the sealing layer 30 including the gas introduction hole 30a was formed on one surface of the insulating substrate 10. In addition, the anti-drying filter 32 according to Example 1 was arranged on a surface on an opposite side to the surface on which the working electrode 20, the counter electrode 21, and the electrolyte layer 11 were installed in the sealing layer 30 so as to cover the gas introduction hole 30a.

### (2) Comparative Example 4

In Example 7 described above, the anti-drying filter according to Comparative Example 1 was used in place of the anti-drying filter according to Example 1.

### (3) Reference Example

In Example 7, a sensor not provided with an anti-drying filter was prepared as an electrochemical gas sensor.

### 3. Assessment

### (1) Water Contact Angle

A contact angle of the surfaces of the anti-drying filters according to Examples 1 to 6 and Comparative Examples 1 to 3 was checked by the following method.

A glass plate with a smooth surface was subjected to a surface treatment under the same condition as each of the Examples 1 to 6. A water contact angle of the surface after the treatment was measured in conformity with JIS R3257 using a fully automatic contact angle meter DMo-701 manufactured by Kyowa Interface Science Co., Ltd. In addition, a water contact angle of a surface of a glass plate including a smooth surface was measured in a similar manner. The obtained water contact angle was adopted as the water contact angle in each of the Comparative Examples 1 to 3.

### (2) Assessment of Anti-Drying Filter

A carbon monoxide transmission rate and a water vapor transmission rate of each of the anti-drying filters according to Examples 1 to 6 and Comparative Examples 1 to 3 were measured by the following method. Results of the measurement are shown in Table 1.

### Carbon Monoxide Transmission Rate:

A transmission rate of carbon monoxide in the anti-drying filters was assessed according to the method described below in conformity with JIS K7126-2. As a gas transmission cell, a first chamber and a second chamber, each fabricated from a 5 mm-thick acrylic plate and having an inner diameter of 50 mm and a length of 100 mm, were used. An opening of each chamber was provided with an edge to enable a sample to be fixed between the openings of the two chambers in a state where a packing was attached to the edge. The sample was fabricated by sandwiching an anti-drying filter between two pieces of aluminum tape provided with a 16 mm-diameter circular hole and pasting the pieces of aluminum tape to each other. Accordingly, a transmission area of carbon monoxide in the anti-drying filter was regulated to 2 cm². A carbon monoxide gas cylinder was connected to the first chamber, and a carbon monoxide gas sensor NAP-508 manufactured by Nemoto Sensor Engineering Co., Ltd. was placed inside the second chamber so as to enable a carbon monoxide concentration in the second chamber to be detected at 1-second intervals. In this state, a sample was fixed between the two chambers. Carbon monoxide gas was introduced into the first chamber from the carbon monoxide gas cylinder so as to attain a carbon monoxide concentration of 150 ppm and a change in a carbon monoxide concentration in the second chamber was measured by the carbon monoxide gas sensor. An increase rate [ppm/s] of the carbon monoxide concentration in the second chamber was calculated by a least-squares method from measurement results by the carbon monoxide gas sensor during a 1-minute period from the start of introduction of the carbon monoxide gas, and the increase rate was adopted as the carbon monoxide transmission rate.

### Water Vapor Transmission Rate:

A transmission rate of water vapor in the anti-drying filters was assessed according to the method described below in conformity with a cup method defined in JIS Z0208. A cup with an inner diameter of 56 mm and a height of 32 mm fabricated from a 1 mm-thick stainless steel plate was used. An opening of the cup was provided with an edge to enable a sample to be fixed by attaching a packing and a press lid to the edge. The sample was fabricated by sandwiching an anti-drying filter between two pieces of aluminum tape provided with a 16 mm-diameter circular hole and pasting the pieces of aluminum tape to each other. Accordingly, a transmission area of water vapor in the anti-drying filter was regulated to 2 cm². A plastic dish holding 10 g of calcium chloride was placed in the cup, a sample was fixed to the cup, and an initial weight of the cup was measured in this state. The cup was placed inside a constant temperature and humidity tank set to 25°C and 90% and, after 24 hours, the cup was taken out and the weight was measured once again. By calculating a difference between a measurement result of the weight and the initial weight, an increase in weight [g] from the initial state of the calcium chloride inside the cup was obtained. A water vapor transmission rate [g/h] was calculated by dividing the increase in weight by 24.

**[Table 1]**

| | Pore size | Hydrophobizing treatment | Water contact angle | Carbon monoxide transmission rate [ppm/s] | Water vapor transmission rate [ppm/s] | Overall assessment |
|---|---|---|---|---|---|---|
| Example 1 | 50nm | Silylation (trimethylchlorosilane) | 83° | 0.019 | 0.006 | Good |
| Example 2 | 70nm | Silylation (trimethylchlorosilane) | 83° | 0.016 | 0.003 | Good |
| Example 3 | 15nm | Silylation (trimethylchlorosilane) | 83° | 0.032 | 0.005 | Good |
| Example 4 | 50nm | Silylation (ethyldimethylchlorosilane) | 88° | 0.012 | 0.003 | Good |
| Example 5 | 50nm | Vapor deposition | 105° | 0.012 | 0.003 | Good |
| Example 6 | 50nm | Resin membrane | 101° | 0.014 | 0.01 | Good |
| Comparative Example 1 | 50nm | None | 41° | 0.012 | 0.027 | Poor |
| Comparative Example 2 | 70nm | None | 41° | 0.01 | 0.034 | Poor |
| Comparative Example 3 | 15nm | None | 41° | 0.038 | 0.023 | Poor |

As shown by these results, in the anti-drying filter according to each example, carbon monoxide permeability is maintained at a high level while water vapor permeability is lower with respect to the anti-drying filter according to each comparative example. Accordingly, it can be confirmed that in the anti-drying filter according to each example, transmission of water vapor is suppressed while maintaining carbon monoxide permeability.

### (3) Assessment of Electrochemical Gas Sensor

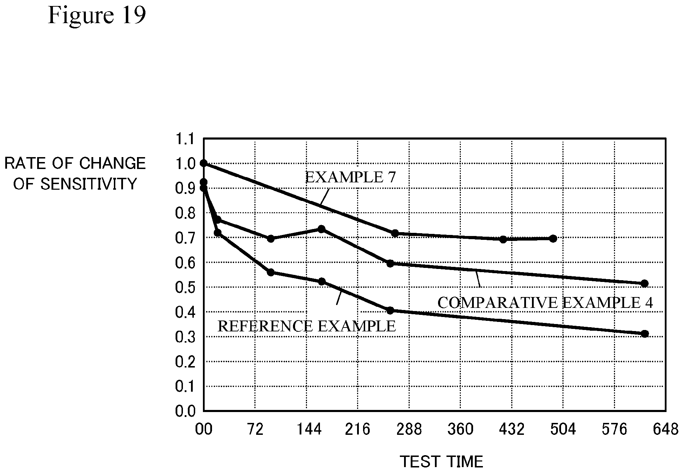

In a state where the electrochemical gas sensor according to each of Example 7, Comparative Example 4, and the reference example was arranged in an atmosphere at a temperature of 25°C and a relative humidity of 10%, carbon monoxide was supplied to the atmosphere and a carbon monoxide concentration in the atmosphere was adjusted to 10 ppm. In this state, a short-circuit current flowing between a detection electrode and a counter electrode in a sensing unit of the electrochemical gas sensor was measured as an output of the electrochemical gas sensor. The output was continuously measured and outputs normalized with 1 as an initial output were adopted as a rate of change of sensitivity. A result of the measurement is shown in FIG. 19. In FIG. 19, the axis of ordinate represents the rate of change of sensitivity and the axis of abscissa represents elapsed time.

As shown by the results, in the case of Example 7, the rate of change of sensitivity was less likely to decline compared to the Comparative Example 4 and the reference example. Therefore, an improvement in durability in a dry atmosphere was confirmed in the electrochemical gas sensor according to Example 7.

As is apparent from the embodiment and the examples described above, the anti-drying filter 32 according to the present invention is capable of effectively suppressing passage of water vapor. Therefore, by applying the anti-drying filter 32 to the electrochemical gas sensor 1, humidity inside the sensor can be prevented from dropping excessively and durability of the electrochemical gas sensor 1 in a dry atmosphere can be improved.

### REFERENCE SIGNS LIST

1 electrochemical gas sensor, 10 insulating base material, 10a first surface, 10b recess, 11 electrolyte layer, 12 first metal layer, 13 second metal layer, 14 third metal layer, 20 working electrode, 21 counter electrode, 22 reference electrode, 30 sealing layer, 30a, 40 gas introduction hole, 31 gas diffusion layer, 32 anti-drying filter

## Claims

1. An electrochemical gas sensor, comprising:
an insulating base material;
an electrolyte layer formed on the insulating base material;
a first metal layer formed on the insulating base material;
a second metal layer formed on the insulating base material so as not to come into contact with the first metal layer;
a working electrode either formed so as to cover surfaces of the electrolyte layer and the first metal layer which face an opposite side to the insulating base material, or interposed between the electrolyte layer and the insulating base material and between the first metal layer and the insulating base material, and formed from the electrolyte layer to the first metal layer; and
a counter electrode either formed so as to cover surfaces of the electrolyte layer and the second metal layer which face an opposite side to the insulating base material, or interposed between the electrolyte layer and the insulating base material and between the second metal layer and the insulating base material, and formed from the electrolyte layer to the second metal layer.

2. The electrochemical gas sensor according to claim 1, wherein
the working electrode is formed on surfaces of the electrolyte layer and the first metal layer which face an opposite side to the insulating base material, and
the counter electrode is formed on surfaces of the electrolyte layer and the second metal layer which face an opposite side to the insulating base material.

3. The electrochemical gas sensor according to claim 1 or 2, wherein
the electrolyte layer is arranged so as not to overlap with the first metal layer and the second metal layer.

4. The electrochemical gas sensor according to any one of claims 1 to 3, further comprising a sealing layer which is arranged on the insulating base material and which covers the electrolyte layer, the working electrode, and the counter electrode.

5. The electrochemical gas sensor according to any one of claims 1 to 4, wherein a through-hole for introducing a gas to the working electrode is provided.

6. The electrochemical gas sensor according to any one of claims 1 to 5, further comprising anti-drying means.

7. The electrochemical gas sensor according to any one of claims 1 to 6, further comprising a gas diffusion layer provided at least at a position that overlaps with the working electrode.

8. The electrochemical gas sensor according to any one of claims 1 to 7, further comprising:
a third metal layer formed on the insulating base material so as not to be electrically connected to the first metal layer and the second metal layer; and
a reference electrode formed from the electrolyte layer to the third metal layer.

9. The electrochemical gas sensor according to any one of claims 1 to 7, further comprising:
a third metal layer formed on the insulating base material so as not to be electrically connected to the first metal layer and the second metal layer, wherein
the third metal layer comes into contact with the electrolyte layer and functions as a reference electrode.

10. The electrochemical gas sensor according to any one of claims 1 to 9, wherein
a recess is formed on a surface of the insulating base material, and
at least any of the electrolyte layer, the first metal layer, and the second metal layer is formed in the recess.

11. A method of manufacturing an electrochemical gas sensor, comprising the steps of:
forming a first metal layer and a second metal layer on the insulating base material so as not to come into contact with each other;
forming an electrolyte layer on the insulating base material; and
forming a working electrode and a counter electrode on the insulating base material so as not to come into contact with each other, wherein
the working electrode is formed from the electrolyte layer to the first metal layer, and
the counter electrode is formed from the electrolyte layer to the second metal layer.

12. The method of manufacturing an electrochemical gas sensor according to claim 11, wherein the working electrode and the counter electrode are formed by applying an electrode material on the insulating base material.

13. The method of manufacturing an electrochemical gas sensor according to claim 11 or 12, wherein the electrolyte layer is formed by applying a material including an electrolyte.

14. The method of manufacturing an electrochemical gas sensor according to any one of claims 11 to 13, further comprising the step of
forming a sealing layer which covers the electrolyte layer, the working electrode, and the counter electrode, wherein
the sealing layer is formed by applying a sealing material.
